# EUROPEAN PATENT APPLICATION

(11) **EP 4 693 626 A1**
(43) Date of publication of application: **11.02.2026**
(21) Application number: 24890021.9
(22) Date of filing: 22.05.2024
(51) Int. Cl.: H01M 50/103

(54) **BATTERY CELL, BATTERY, AND ELECTRICAL APPARATUS**

(30) Priority: 16.11.2023 CN 202311532060
(71) Applicant: Contemporary Amperex Technology Co., Limited, Ningde, Fujian 352100 (CN)
(72) Inventor: WU, Kai, Ningde, Fujian 352100 (CN); LIN, Wenfa, Ningde, Fujian 352100 (CN); GUO, Zhengshan, Ningde, Fujian 352100 (CN)
(74) Representative: Ran, Handong
(86) International application number: PCT/CN2024/094723
(87) International publication number: WO 2025/102650

(57) **Abstract**

A battery cell (20), a battery (100), and an electrical apparatus. The battery cell (20) comprises: a casing assembly (21), the casing assembly (21) comprising a housing (211) and a post (212), the housing (211) having a first wall (2111), the first wall (2111) being provided with a through hole (2112), the post (212) passing through the through hole (2112), the post (212) being provided with a via hole (2121), and the via hole (2121) passing through the post (212) to connect the inner and outer sides of the housing (211); and an electrode assembly (22), the electrode assembly (22) being provided in the housing (211), the electrode assembly (22) having a conductive portion (221), the conductive portion (221) passing through the via hole (2121), a first connecting portion (23) being formed between the conductive portion (221) and the via hole (2121), and the first connecting portion (23) sealing the via hole (2121).

## Description

### CROSS-REFERENCE TO RELATED APPLICATION

This application claims priority to Chinese Patent Application No. 202311532060.3 filed on November 16, 2023, which is incorporated by reference in its entirety.

### TECHNICAL FIELD

The present application relates to the technical field of batteries, and in particular to, a battery cell, a battery, and an electrical apparatus.

### BACKGROUND

In recent years, new energy vehicles have made a leap forward in development. In the field of electric vehicles, power batteries, as power sources of electric vehicles, play an irreplaceable and important role. The battery is composed of a box and a plurality of battery cells accommodated inside the box. Therefore, in order to improve an energy storage capacity of the battery, how to increase an energy density of the battery cells has become a problem that currently needs to be solved urgently.

### SUMMARY

Embodiments of the present application provide a battery cell, a battery, and an electrical apparatus, which can effectively increase an energy density of battery cells and is then beneficial for improving an energy storage capacity of a battery.

In a first aspect, an embodiment of the present application provides a battery cell, including: a case assembly, where the case assembly includes a shell and a terminal post, the shell has a first wall, the first wall is provided with a through hole, the terminal post is arranged in the through hole in a penetrating manner, the terminal post is provided with a via hole, the via hole penetrates through the terminal post to communicate an inner side to an outer side of the shell; and an electrode assembly, where the electrode assembly is arranged inside the shell, the electrode assembly has a conductive portion, the conductive portion is arranged in the via hole in a penetrating manner, and a first connecting portion is formed between the conductive portion and the via hole, and the first connecting portion seals the via hole.

In the above technical solution, the terminal post is mounted on the first wall of the shell through the through hole; and the electrode assembly is mounted on the terminal post in a manner of arranging the conductive portion in the via hole of the terminal post in the penetrating manner. In one aspect, the via hole can play a role in accommodating the conductive portion and reduce a volume occupied by the conductive portion on the inner side of the shell. This can enlarge an available space of the electrode assembly in the shell, which is conducive to increasing a size of the electrode assembly and increasing an energy density of the battery cell. In another aspect, by forming the first connecting portion between the conductive portion and the via hole, an effect of sealing the via hole can be achieved, without a need of arranging another component to seal the via hole, thereby reducing a quantity of components of the battery cell, simplifying a manufacturing process for the battery cell, reducing the weight, reducing the costs, and further increasing the energy density of the battery cell. Moreover, since the conductive portion is arranged in the via hole in the penetrating manner, the conductive portion and the terminal post are mounted more reliably, so that a probability of disengagement of the conductive portion and the terminal post can be reduced, which is beneficial for improving reliability of the battery cell.

In some embodiments of the present application, the shell has a first direction and a second direction; the first direction and the second direction intersect each other and are parallel to the first wall; and a size of the via hole in the first direction is greater than a size of the via hole in the second direction.

In the above technical solution, by setting the via hole to have the size in the first direction that is greater than the size in the second direction, the via hole can be a strip-shaped hole or an elongated slit, and a cross section of the conductive portion can also be strip-shaped or elongated. In one aspect, connecting surfaces of the conductive portion and the via hole can be enlarged, and reliability of connection between the conductive portion and the terminal post can be improved. In another aspect, it is beneficial for enlarging a surface area of the conductive portion and reducing an internal resistance of the conductive portion, thereby increasing a current density of the conductive portion.

In some embodiments of the present application, in the first direction, a size of the conductive portion is less than or equal to the size of the via hole.

In the above technical solution, in the first direction, the size of the conductive portion can be less than the size of the via hole, so that a gap can be formed between the conductive portion and the via hole. The gap is conducive to mounting the conductive portion into the via hole, thereby increasing a success rate of mounting of the conductive portion. In the first direction, the size of the conductive portion may also be equal to the size of the via hole, so that there may be no gap between the conductive portion and the via hole. This allows close fit to be formed between the conductive portion and the via hole and is beneficial for improving sealing performance between the conductive portion and the via hole.

In some embodiments of the present application, in the first direction, the size of the conductive portion is L1, and the size of the via hole is L2, where 0 mm≤L2-L1≤4 mm.

In the above technical solution, by setting a difference between the size L1 of the conductive portion and the size L2 of the via hole in the first direction within the range of 0 mm to 4 mm, there can be no gap or there may be a small gap between the conductive portion and a hole wall of the via hole in the first direction. In one aspect, the sealing performance between the conductive portion and the via hole can be improved in case of no gap. In another aspect, the difficulty of mounting between the conductive portion and the via hole can be reduced in a case of a small gap, and a probability of damage to the conductive portion during mounting or removal can be reduced. It is beneficial for reducing a probability of a sealing failure occurring between the conductive portion and the via hole.

In some embodiments of the present application, in the first direction, a size of the first connecting portion is greater than the size of the via hole.

In the above technical solution, the first connecting portion can cover the via hole in the first direction, so as to play a better sealing role and reduce a probability of poor sealing between the via hole and the conductive portion.

In some embodiments of the present application, in the second direction, a size of the conductive portion is less than or equal to the size of the via hole.

In the above technical solution, in the second direction, the size of the conductive portion can be less than the size of the via hole, so that there may be a gap between the conductive portion and the via hole to facilitate the conductive portion to be mounted in the via hole, thereby increasing the success rate of mounting of the conductive portion. In the second direction, the size of the conductive portion may also be equal to the size of the via hole, so that there may be no gap between the conductive portion and the via hole. This allows close fit to be formed between the conductive portion and the via hole and is beneficial for improving the sealing performance between the conductive portion and the via hole.

In some embodiments of the present application, in the second direction, the size of the conductive portion is W1, and the size of the via hole is W2, where 0 mm≤W2-W1≤0.1 mm.

In the above technical solution, by setting a difference between the size W1 of the conductive portion and the size W2 of the via hole in the second direction within the range of 0 mm to 0.1 mm, there can be no gap or there may be a small gap between the conductive portion and a hole wall of the via hole in the second direction. In one aspect, the sealing performance between the conductive portion and the via hole can be improved in case of no gap. In another aspect, the difficulty of mounting between the conductive portion and the via hole can be reduced in a case of a small gap, and a probability of damage to the conductive portion during mounting or removal can be reduced. It is beneficial for reducing the probability of the sealing failure between the conductive portion and the via hole.

In some embodiments of the present application, in the second direction, a size of the first connecting portion is greater than the size of the via hole.

In the above technical solution, the first connecting portion can cover the via hole in the second direction, so as to play a better sealing role and reduce the probability of poor sealing between the via hole and the conductive portion.

In some embodiments of the present application, the conductive portion has a far end portion far away from the inner side of the shell; and the far end portion is connected to the via hole through the first connecting portion.

In the above technical solution, the conductive portion is connected to the via hole through the first connecting portion at the far end portion. In one aspect, the first connecting portion is located on an outer side of the via hole, which is convenient for molding and can reduce the difficulty of connection between the conductive portion and the via hole and improve the product yield. In another aspect, the first connecting portion is connected between the far end portion and the via hole, which can effectively prevent pollutants such as impurities and large particulate matters from going deep into the via hole, reduce pollutants entering the gap formed between the conductive portion and the via hole, reduce a probability of electrochemical corrosion occurring in the conductive portion and the terminal post, and help improve the reliability of the battery cell.

In some embodiments of the present application, the terminal post has a first surface; the first surface is provided with an avoidance slot; the via hole penetrates through the avoidance slot; and the first connecting portion is located inside the avoidance slot.

In the above technical solution, the avoidance slot can play a role in accommodating the first connecting portion. This can reduce a volume of an assembly formed by the terminal post, the conductive portion, and the first connecting portion, which is beneficial for saving a space. In another aspect, by providing the avoidance slot, the weight of the terminal post can be reduced, and the energy density of the battery cell can be increased.

In some embodiments of the present application, the first connecting portion has an outer contour surface facing an outer side of the avoidance slot, and the outer contour surface does not protrude out of the first surface.

In the above technical solution, by setting the outer contour surface of the first connecting portion not to protrude out of the first surface, a probability of the first surface being a plane can be increased. When the terminal post is connected to an adapter through the first surface, the terminal post and the adapter can resist against each other face to face, which is beneficial for improving reliability of connection between the terminal post and the adapter and improving the reliability of the battery cell.

In some embodiments of the present application, the shell has a third direction; the third direction is perpendicular to the first wall; and in the third direction, a size of the avoidance slot is H1, where 1 mm≤H1.

In the above technical solution, the third direction may be a slot depth direction of the avoidance slot; the conductive portion and the terminal post may be connected by welding, and a height of a welded fusion portion is generally less than 1 mm. By setting the size H1 of the avoidance slot in the third direction to be greater than or equal to 1 mm, the avoidance slot can accommodate a first connecting portion with a larger volume, and a probability of completely accommodating the first connecting portion can be increased. Secondly, the size H1 of the avoidance slot is greater than or equal to 1 mm, which can further reduce the weight of the terminal post and increase the energy density of the battery cell.

In some embodiments of the present application, the terminal post has a first surface; the via hole penetrates through the first surface; the first connecting portion protrudes out of the first surface; the terminal post is configured to be connected to an adapter; an accommodating part is arranged at an end portion of the adapter that faces the first surface; and the first connecting portion is at least partially located inside the accommodating part.

In the above technical solution, the first connecting portion can protrude out of the first surface. In this case, a periphery of the first connecting portion can be unblocked, so that it is easy to mold the first connecting portion. This can increase a probability of molding the first connecting portion. The accommodating part of the adapter can play a role in accommodating the first connecting portion, so that a volume of an assembly formed by the terminal post, the conductive portion, and the adapter is small; the weight can be reduced; and the energy density of the battery cell can be increased.

In some embodiments of the present application, the terminal post has a first surface; the via hole penetrates through the first surface; the first connecting portion has an outer contour surface facing an outer side of the terminal post; and the outer contour surface is flush with the first surface.

In the above technical solution, by setting the outer contour surface of the first connecting portion to be flush with the first surface of the terminal post, when the terminal post is connected to the adapter through the first surface, the connection between the terminal post and the adapter can be tighter, which is beneficial for improving the reliability of connection between the terminal post and the adapter.

In some embodiments of the present application, the via hole is formed with a first orifice in the outer side of the terminal post, and is formed with a second orifice in an inner side of the terminal post; and a projection of the first orifice on the first wall and a projection of the second orifice on the first wall do not overlap.

In the above technical solution, by making the projections of the first orifice and the second orifice of the via hole on the first wall not overlap, the impact of the first connecting portion on an internal environment of the shell and the electrode assembly during the molding can be effectively reduced, thereby improving the safety of the internal environment of the shell and the electrode assembly.

In some embodiments of the present application, the via hole has a hole central axis, and the hole central axis is inclined relative to the first wall.

In the above technical solution, the hole central axis of the via hole is inclined relative to the first wall, that is, the via hole is an inclined hole relative to the first wall. This can reduce the impact of the first connecting portion on the internal environment of the shell and the electrode assembly during the molding, and improve the manufacturability of the via hole. It is beneficial for improving the product yield during manufacturing of the terminal post.

In some embodiments of the present application, an angle between the hole central axis and the first wall is α, where 45 degrees ≤α≤ 90 degrees.

In the above technical solution, if the angle α between the hole central axis and the first wall is less than 45 degrees, a width of the terminal post will be large, which increases material consumption and also increases the difficulty of manufacturing the terminal post. If the angle α between the hole central axis and the first wall is greater than 90 degrees, a staggering distance between the first orifice and the second orifice is short, which is not conducive to reducing the impact of the first connecting portion on the internal environment of the shell and the electrode assembly during the molding.

In some embodiments of the present application, a guide port is formed between the inner side of the terminal post and the via hole; and a width of the guide port gradually decreases in a direction from the inner side of the terminal post to the outer side of the terminal post.

In the above technical solution, since the width of the guide port gradually decreases in the direction from the inner side of the terminal post to the outer side of the terminal post, and an initial width of the guide port is greater than a width of the via hole, the conductive portion can easily enter the guide port first in the process of mounting the conductive portion into the via hole, and can be easily inserted into the via hole under the guiding action of the guide port. In this way, resistance to the conductive portion passing through the via hole can be reduced; damage to the conductive portion can be reduced; and mounting efficiency of the conductive portion can be improved.

In some embodiments of the present application, the terminal post includes: a post body part, where the post body part is arranged in the through hole in a penetrating manner; a first plate part and a second plate part; the first plate part and the second plate part are vertically connected to the post body part; the first plate part is located on the outer side of the shell, and the second plate part is located on the inner side of the shell; and the via hole penetrates through the first plate part, the post body part, and the second plate part.

In the above technical solution, by setting the terminal post to include the post body part, the first plate part, and the second plate part, the terminal post can be of an I-shaped structure. The first plate part and the second plate part are located on the inner and outer sides of the shell, which can reduce a probability that the terminal post is separated from the shell and improve reliability of mounting of the terminal post and the shell. The via hole can be formed in the first plate part, the post body part, and the second plate part. An accommodating space formed in the via hole is large, which can accommodate a conductive portion with a larger volume and improve the reliability of connection between the conductive portion and the terminal post. Meanwhile, an effect of reducing the mass of the terminal post is better, and it is beneficial for increasing the energy density of the battery cell.

In some embodiments of the present application, the terminal post is provided with a connecting region; the connecting region is configured to be connected to the adapter; and a second connecting portion is formed between the connecting region and the adapter.

In the above technical solution, the terminal post is connected to the adapter through the connecting region, and the second connecting portion is formed between the connecting region and the adapter. In this way, the terminal post and the adapter can be connected without providing an additional component between them. This can reduce a quantity of components, thus reducing the weight of the battery cell, and it is beneficial for improving the energy density of the battery cell.

In some embodiments of the present application, the shell includes a shell body and an end cover; the end cover covers an opening of the shell body; and the shell body or the end cover is formed with the first wall.

In the above technical solution, the first wall can be arranged on the shell body. That is, the via hole is formed in the shell body, and the terminal post is mounted on the shell body. In this way, the structure on the end cover can be simplified, a quantity of components on the end cover can be reduced, and the weight of the end cover can be reduced, thereby improving reliability of connection between the end cover and the shell body. The first wall can also be arranged on the end cover. That is, the via hole is formed in the end cover, and the terminal post is mounted on the end cover. Since the end cover can be separated from the shell body and processed separately, the via hole can be processed as the end cover is processed, which can reduce the difficulty of manufacturing of the via hole and improve the processing yield of the via hole.

In a second aspect, an embodiment of the present application further provides a battery, including the foregoing battery cell.

In the above technical solution, the battery cell is provided with the via hole in the terminal post; the conductive portion of the electrode assembly is arranged in the via hole in the penetrating manner; and the via hole and the conductive portion are hermetically connected through the first connecting portion. In this way, it is beneficial for reducing a quantity of components of the battery cell and reducing the weight of the battery cell. This can increase the energy density of the battery cell and then increase the energy density of the battery.

In a third aspect, an embodiment of the present application further provides an electrical apparatus, including the foregoing battery cell, or the foregoing battery.

In the above technical solution, the use of the above battery cell or battery can effectively increase the energy density of the battery, thereby prolonging working time of the electrical apparatus and significantly enhancing the user experience.

### BRIEF DESCRIPTION OF DRAWINGS

To more clearly describe the technical solutions of the embodiments of the present application, the drawings to be used in the embodiments will be briefly introduced below, and it should be understood that the following drawings only show some embodiments of the present application, and therefore should not be considered as limiting the scope of the present application. For those of ordinary skills in the art, other relevant drawings may also be obtained based on these drawings without creative efforts.
FIG. 1 is a schematic structural view of a vehicle according to some embodiments of the present application;
FIG. 2 is a structural exploded diagram of a battery according to some embodiments of the present application;
FIG. 3 is a first partially structural diagram of a battery cell according to some embodiments of the present application;
FIG. 4 is a first schematic structural diagram of a terminal post and a conductive portion according to some embodiments of the present application;
FIG. 5 is a first schematic structural diagram of a terminal post according to some embodiments of the present application;
FIG. 6 is a second schematic structural diagram of a terminal post and a conductive portion according to some other embodiments of the present application;
FIG. 7 is a third schematic structural diagram of a terminal post and a conductive portion according to still some other embodiments of the present application;
FIG. 8 is a second partially structural diagram of a battery cell according to some embodiments of the present application;
FIG. 9 is a second schematic structural diagram of a terminal post according to some embodiments of the present application; and
FIG. 10 is a third schematic structural diagram of a terminal post according to some embodiments of the present application.

### Reference numerals:

1000: vehicle;
100: battery;
10: box; 11: first box body; 12: second box body;
20: battery cell;
21: case assembly;
211: shell; 2111: first wall; 2112: through hole; 2011: shell body; 2012: end cover;
212: terminal post; 2121: via hole; 2121a: first orifice; 2121b: second orifice; 2121c: hole central axis; 2122: first surface; 2123: avoidance slot; 2124: guide port; 2125: connecting region; 2021: post body part; 2022: first plate part; 2023: second plate part;
22: electrode assembly; 221: conductive portion; 2211: far end portion;
23: first connecting portion; 23a: outer contour surface;
24: adapter; 24a: accommodating part;
25: second connecting portion; 26: sealing member;
200: controller; 300: motor; X: first direction; Y: second direction; Z: third direction.

### DETAILED DESCRIPTION

In order to make the objects, technical solutions and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. All other embodiments obtained by those of ordinary skill in the art based on the embodiments in the present application without any creative effort shall fall within the scope of protection of the present application.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "include" and "have" and any variations thereof in the specification and the claims of the present application as well as the above description of the drawings are intended to cover non-exclusive inclusions. The terms "first," "second," etc. in the specification and the claims of the present application as well as the above drawings are used to distinguish different objects, rather than to describe a specific order or primary-secondary relationship.

Reference in the present application to an "embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments.

In the description of the present application, it should be noted that the terms "mounting," "connecting," "connection" and "attachment" should be understood in a broad sense, unless otherwise explicitly specified or defined, for example, it may be a fixed connection, a detachable connection or an integrated connection; and may be a direct connection or an indirect connection through an intermediate medium, or may be a communication between the interior of two elements. For those of ordinary skill in the art, the specific meanings of the above terms in the present application can be understood according to specific situations.

In the present application, the term "and/or" is only an association relation describing associated objects, which means that there may be three relations, for example, A and/or B may represent three situations: A exists alone, both A and B exist, and B exists alone. In addition, the character "/" in the present application generally means that the associated objects before and after it are in an "or" relationship.

In the embodiments of the present application, the same reference signs denote the same components, and for the sake of brevity, detailed descriptions of the same components are omitted in different embodiments. It should be understood that the thickness, length, width and other dimensions of the various components in the embodiments of the present application shown in the drawings, as well as the overall thickness, length, width and other dimensions of an integrated apparatus, are for illustrative purposes only, and should not constitute any limitation to the present application.

In the present application, the phrase "a plurality of" means two or more.

In the present application, the battery cell may include a lithium-ion secondary battery, a lithium-ion primary battery, a lithium sulfur battery, a sodium lithium-ion battery, a sodium-ion battery or a magnesium-ion battery and so on. This is not limited in the embodiments of the present application. The battery cell may be in a cylindrical shape, a flat shape, a cuboid shape or another shape, which is also not limited in the embodiments of the present application. The battery cells are generally classified into three types depending on the way of encapsulation: cylindrical battery cells, square battery cells and pouch battery cells, which are also not limited in the embodiments of the present application.

The battery mentioned in the embodiments of the present application refers to a single physical module comprising one or more battery cells to provide higher voltage and capacity. For example, the battery mentioned in the present application may include a battery module, a battery pack, or the like. The battery generally includes a box for packaging one or more battery cell or a plurality of battery modules. The box can prevent liquid or other foreign matters from affecting charging or discharging of the battery cells.

The battery cell includes a shell, an electrode assembly, and an electrolyte, where the shell is used to accommodate the electrode assembly and the electrolyte. The electrode assembly consists of a positive electrode plate, a negative electrode plate, and a separator film. The battery cell operates mainly relying on movement of metal ions between the positive electrode plate and the negative electrode plate. The positive electrode plate includes a positive electrode current collector and a positive electrode active material layer, a surface of the positive electrode current collector is coated with the positive electrode active material layer, the positive electrode current collector not coated with the positive electrode active material layer protrudes from the positive electrode current collector already coated with the positive electrode active material layer, and the positive electrode current collector not coated with the positive electrode active material layer is used as a positive tab. Taking a lithium-ion battery as an example, the material of the positive electrode current collector may be aluminum, and the positive electrode active material may be lithium cobalt oxide, lithium iron phosphate, ternary lithium, lithium manganate, etc. The negative electrode plate includes a negative electrode current collector and a negative electrode active material layer, a surface of the negative electrode current collector is coated with the negative electrode active material layer, the negative electrode current collector not coated with the negative electrode active material layer protrudes from the negative electrode current collector already coated with the negative electrode active material layer, and the negative electrode current collector not coated with the negative electrode active material layer is used as a negative tab. The material of the negative electrode current collector may be copper, and the negative electrode active material may be carbon, silicon, etc. In order to ensure that no fusing occurs when a large current passes, there are a plurality of positive tabs which are stacked together, and there are a plurality of negative tabs which are stacked together.

A material of the separator may be polypropylene (PP), polyethylene (PE), or the like. In addition, the electrode assembly may be of a wound structure or a stacked structure. The embodiments of the present application do not impose a limitation on this.

In recent years, new energy vehicles have made a leap forward in development. In the field of electric vehicles, power batteries, as power sources of electric vehicles, play an irreplaceable and important role. The battery is composed of a box and a plurality of battery cells accommodated inside the box. Therefore, in order to improve an energy storage capacity of the battery, how to increase an energy density of the battery cells has become a problem that currently needs to be solved urgently.

In a general structure of a battery cell, a negative electrode plate and a positive electrode plate are electrically connected to a terminal post through tabs, and the tabs are arranged on an inner side of a shell. As a result, the tabs occupy a space, and a space used by the electrode assembly is reduced. A space between the electrode assembly and the tab in the shell is wasted. This is not beneficial for maximizing a size of the electrode assembly to utilize the space inside the shell, and is not beneficial for increasing an energy density of the battery cell.

Based on the above considerations, in order to solve the problem that the tabs are arranged on the inner side of the shell and occupy the space, so that the size of the electrode assembly cannot be maximized, which is not beneficial for improving the energy density of the battery cell, the inventor has designed a battery cell, including: a case assembly and an electrode assembly. The case assembly includes a shell and a terminal post; the shell has a first wall; the first wall is provided with a through hole; the terminal post is arranged in the through hole in a penetrating manner; the terminal post is provided with a via hole; the via hole penetrates through the terminal post to communicate an inner side to an outer side of the shell; the electrode assembly is arranged inside the shell; the electrode assembly has a conductive portion; the conductive portion is arranged in the via hole in a penetrating manner, and a first connecting portion is formed between the conductive portion and the via hole; and the first connecting portion seals the via hole.

In the battery cell with this structure, the terminal post is mounted on the first wall of the shell through the through hole; and the electrode assembly can be mounted on the terminal post in a manner of arranging the conductive portion in the via hole of the terminal post in the penetrating manners. By using this structure, in one aspect, the via hole can play a role in accommodating the conductive portion and reduce a volume occupied by the conductive portion on the inner side of the shell. Thus, this can enlarge an available space of the electrode assembly in the shell, which is conducive to increasing a size of the electrode assembly and increasing an energy density of the battery cell. In another aspect, since the conductive portion is arranged in the via hole in the penetrating manner, the mounting between the conductive portion and the terminal post is reliable, so that a probability of disengagement of the conductive portion and the terminal post can be reduced, which is beneficial for improving reliability of the battery cell. Secondly, by forming the first connecting portion between the conductive portion and the via hole, an effect of sealing the via hole can be achieved, without a need of arranging another component to seal the via hole, thereby reducing a quantity of components of the battery cell, reducing the weight, and further playing a role in increasing the energy density of the battery cell.

The battery cell or battery disclosed in this embodiment of the present application can be applied to, but not limited to, an electrical apparatus such as a vehicle, a ship, or an aircraft. A power source system with the battery cell, the battery, and the electrical apparatus that are disclosed in the present application can be used. In this way, it is beneficial for enlarging an application range of the battery cell.

The embodiments of the present application provide an electrical apparatus that uses a battery as a power source, and the electrical apparatus may be, but is not limited to, a mobile phone, a tablet, a notebook, an electric toy, an electric tool, a battery vehicle, an electric vehicle, a ship, a spacecraft, and the like. The electric toy may include fixed or mobile electric toys, such as game consoles, electric vehicle toys, electric ship toys, and electric airplane toys. The spacecraft may include airplanes, rockets, space shuttles, spaceships, etc.

For the convenience of description in the following embodiments, an electrical apparatus being a vehicle 1000 according to an embodiment of the present application is taken as an example for the description.

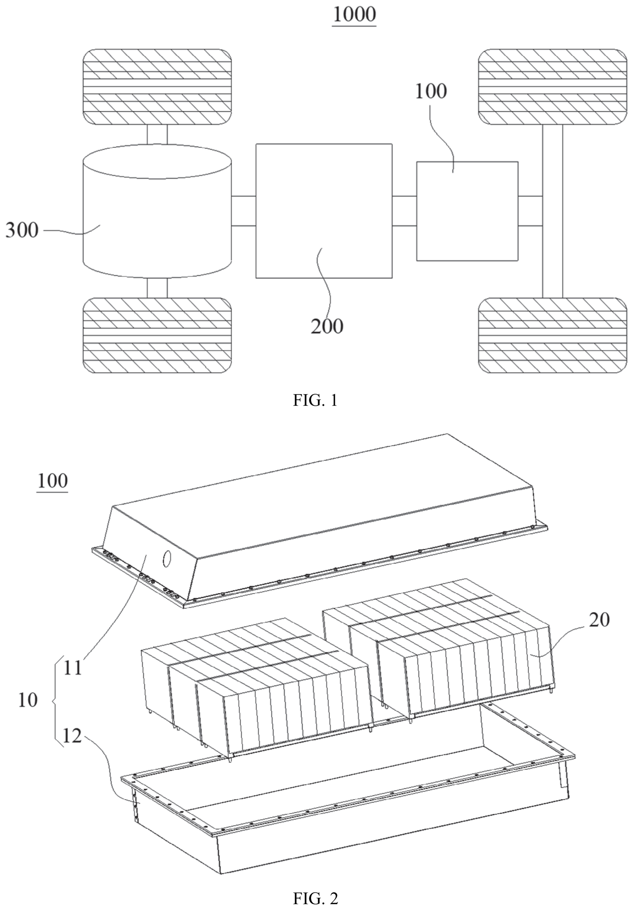

Referring to FIG. 1, FIG. 1 is a schematic structural diagram of a vehicle 1000 according to some embodiments of the present application. The vehicle 1000 may be a fuel vehicle, a gas vehicle or a new energy vehicle. The new energy vehicle may be an all-electric vehicle, a hybrid vehicle, an extended range electric vehicle, or the like. A battery 100 is provided inside the vehicle 1000. The battery 100 may be provided at the bottom, or head, or tail of the vehicle 1000. The battery 100 may be used as a power supply for the vehicle 1000, for example, the battery 100 may be used as an operating power source for the vehicle 1000. The vehicle 1000 may further include a controller 200 and a motor 300. The controller 200 is configured to control the battery 100 to supply power to the motor 300, for example, to supply power for starting, navigation and driving of the vehicle 1000.

In some embodiments of the present application, the battery 100 may not only be used as the operating power source for the vehicle 1000, but also as a driving power source for the vehicle 1000, to replace or partially replace fuel or natural gas to provide driving power for the vehicle 1000.

Referring to FIG. 2, FIG. 2 is a structural exploded diagram of a battery 100 according to some embodiments of the present application. The battery 100 includes a box 10 and a plurality of battery cells 20. The battery cells 20 are configured to be accommodated in the box 10. The box 10 is configured to provide an accommodating space for the battery cells 20, and the box 10 may be of various structures. In some embodiments, the box 10 includes a first box body 11 and a second box body 12. The first box body 11 and the second box body 12 cover each other, and the first box body 11 and the second box body 12 together define an assembling space for accommodating the battery cell 20. The second box body 12 may be of a hollow structure with one end opened. The first box body 11 may be of a platy structure. The first box body 11 covers an open side of the second box body 12, to enable the first box body 11 and the second box body 12 to jointly define an accommodating space. Both the first box body 11 and the second box body 12 can also be of hollow structures with one side opened. The open side of the first box body 11 covers the open side of the second box body 12. Certainly, the box 10 formed by the first box body 11 and the second box body 12 may be in various shapes, such as a cylinder and a cuboid.

In the battery 100, the plurality of battery cells 20 may be connected in series or in parallel or be in parallel-series connection. The parallel-series connection means that the plurality of battery cells 20 are connected in both series and parallel. The plurality of battery cells 20 may be directly connected in series or in parallel or be in parallel-series connection. The whole composed of the plurality of cells 20 is then accommodated in the box 10. Certainly, the battery 100 may also be in the form of a battery module composed of a plurality of cells 20 that are connected in series or in parallel or are in parallel-series connection, and then a plurality of battery modules are connected in series or in parallel or are in parallel-series connection to form a whole which is accommodated in the box 10. The battery 100 may further include other structures. For example, the battery 100 may further include a busbar component for electrically connecting the plurality of battery cells 20.

Referring to FIG. 2, the battery 100 may include a plurality of rows of battery cells 20. The plurality of rows of battery cells 20 are arranged in a length direction of the box 10, and each row of battery cells 20 includes a plurality of battery cells 20 arranged in a width direction of the box 10. Alternatively, the plurality of rows of battery cells 20 are arranged in the width direction of the box 10, and each row of battery cells 20 includes a plurality of battery cells 20 arranged in the length direction of the box 10. Each battery cell 20 may be a secondary battery or a primary battery, or may be a lithium-sulfur battery, a sodium-ion battery or a magnesium-ion battery, but is not limited thereto. Each battery cell 20 may be cylindrical, flat, cuboid, or in other shapes. Exemplarily, the battery cells 20 are cylindrical.

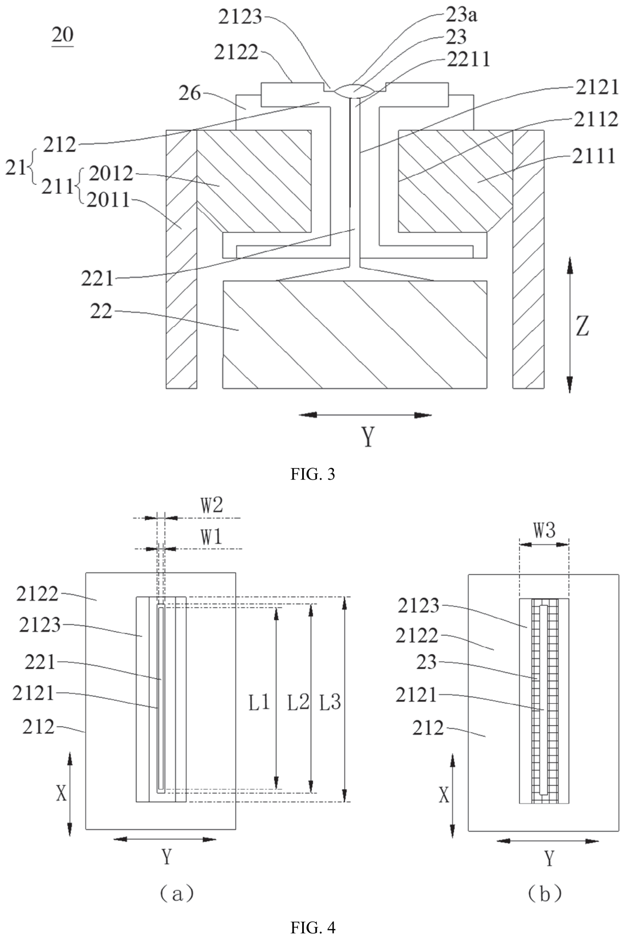

According to some embodiments of the present application, referring to FIG. 3, an embodiment of the present application provides a battery cell 20, including: a case assembly 21 and an electrode assembly 22. The case assembly 21 includes a shell 211 and a terminal post 212; the shell 211 has a first wall 2111; the first wall 2111 is provided with a through hole 2112; the terminal post 212 is arranged in the through hole 2112 in a penetrating manner; the terminal post 212 is provided with a via hole 2121; the via hole 2121 penetrates through the terminal post 212 to communicate an inner side to an outer side of the shell 211; the electrode assembly 22 is arranged inside the shell 211; the electrode assembly 22 has a conductive portion 221; the conductive portion 221 is arranged in the via hole 2121 in a penetrating manner, and a first connecting portion 23 is formed between the conductive portion 221 and the via hole 2121; and the first connecting portion 23 seals the via hole 2121.

The shell 211 may be a container for accommodating the electrode assembly 22. The shell 211 may be, but is not limited to, an aluminum shell, a steel shell, or the like. The shell 211 may have a plurality of shell walls. Exemplarily, the shell 211 may be, but is not limited to, a cylindrical shell or a square shell. The square shell is taken as an example. The shell 211 may have six shell walls. The first wall 2111 may be one of the plurality of shell walls. Exemplarily, the first wall 2111 may be one of a top wall, a side wall, and a bottom wall of the shell 211.

The terminal post 212 may be a conductive component having one end connected to the electrode assembly 22 and another end connected to an external conductor or to one pole of an adjacent battery cell 20 in a battery pack. The external conductor may be, but is not limited to, a busbar and a terminal post 212 of the adjacent battery cell 20.

The conductive portion 221 may be a conductive component extending out of a positive electrode plate or a negative electrode plate. The conductive portion 221 may be a tab of the positive electrode plate or the negative electrode plate. The conductive portion 221 may be, but is not limited to, sheet-like, linear, block-shaped, or the like. The conductive portion 221 may be shaped by ultrasonic welding before being arranged in the via hole 2121 in the penetrating manner.

The first connecting portion 23 may be a structure that can be configured to play a role in sealing between the via hole 2121 and the conductive portion 221. For example, the first connecting portion 23 may be a welded fusion portion formed during welding between the terminal post 212 and the conductive portion 221. The welded fusion portion may be a structure formed by cooling after the terminal post 212, the conductive portion 221, and a welding flux are fused. Exemplarily, the conductive portion 221 and the via hole 2121 may be connected by laser filler wire welding, and meanwhile, the conductive portion 221 and the via hole 2121 may be sealed. Or the first connecting portion 23 may also be an adhesive or the like.

By implementing sealing between the via hole 2121 and the conductive portion 221 by the first connecting portion 23, this can reduce pollutants such as impurities in an external environment that enter the shell 211, thereby improving internal stability of the battery cell 20 and reliability of the battery cell 20. Secondly, by using a mode of arranging the conductive portion 221 in the via hole 2121 in the penetrating manner and mounting the conductive portion 221 on the terminal post 212, considering a sealing requirement, if a cover plate is provided to seal the via hole 2121, a large number of components are included, and the weight of the battery cell 20 increases. In the present application, using the first connecting portion 23 to implement sealing between the via hole 2121 and the conductive portion 221 can eliminate a sealing component such as a cover plate. This can reduce a quantity of components, reduce the weight of the battery cell 20, and then increase the energy density of the battery cell 20.

In the above technical solution, the terminal post 212 is mounted on the first wall 2111 of the shell 211 through the through hole 2112; and the electrode assembly 22 is mounted on the terminal post 212 in a manner of arranging the conductive portion 221 in the via hole 2121 of the terminal post 212 in the penetrating manner. In one aspect, the via hole 2121 can play a role in accommodating the conductive portion 221 and reduce a volume occupied by the conductive portion 221 on the inner side of the shell 211. This can enlarge a space available for the electrode assembly 22 in the shell 211, which is conducive to increasing a size of the electrode assembly 22 and increasing the energy density of the battery cell 20. In another aspect, by forming the first connecting portion 23 between the conductive portion 221 and the via hole 221, an effect of sealing the via hole 2121 can be achieved, without a need of arranging another component to seal the via hole 2121, thereby reducing a quantity of components of the battery cell 20, simplifying a manufacturing process for the battery cell 20, reducing the weight, reducing the costs, and further increasing the energy density of the battery cell 20. Since the conductive portion 221 is arranged in the via hole 2121 in the penetrating manner, the conductive portion 221 and the terminal post 212 are mounted more reliably, so that a probability of disengagement of the conductive portion 221 and the terminal post 212 can be reduced, and the reliability of the battery cell 20 is improved.

A sealing member 26 may be arranged between the terminal post 212 and the through hole 2112. The sealing member 26 may play a sealing role between the terminal post 212 and the through hole 2112. Exemplarily, the sealing member 26 may be a sealing ring.

In some embodiments of the present application, as shown in FIG. 4, the shell 211 has a first direction X and a second direction Y; the first direction X and the second direction Y intersect each other and are parallel to the first wall 2111; and a size of the via hole 2121 in the first direction X is greater than a size of the via hole 2121 in the second direction Y.

The first direction X and the second direction Y may be two directions parallel to the first wall 2111. For example, the first direction X and the second direction Y may be two of a length direction, a width direction, and a height direction of the shell 211 (referring to FIG. 3). Alternatively, the first direction X may be a direction forming an angle with one of the length direction, the width direction, and the height direction of the shell 211, and the second direction Y may be a direction forming an angle with another one of the length direction, the width direction, and the height direction of the shell 211. The first direction X and the second direction Y may be perpendicular to each other or form an angle.

The size of the via hole 2121 in the first direction X is greater than the size of the via hole 2121 in the second direction Y. It can be understood that the via hole 2121 has a length and a width, that is, the via hole 2121 can be a strip-shaped hole or an elongated slit. Correspondingly, a size of the conductive portion 221 in the first direction X is greater than a size of the conductive portion 221 in the second direction Y. That is, a cross section of the conductive portion 221 may be strip-shaped or elongated, and the conductive portion 221 may be sheet-like. In this way, a surface area of the conductive portion 221 may be large, which is beneficial for reducing an internal resistance of the conductive portion 221 and increasing a current density of the conductive portion 221.

In the above technical solution, by setting the size of the via hole 2121 in the first direction X to be greater than the size of the via hole 2121 in the second direction Y, the via hole 2121 can be the strip-shaped hole or the elongated slit, and the cross section of the conductive portion 221 can also be strip-shaped or elongated. In one aspect, connecting surfaces of the conductive portion 221 and the via hole 2121 can be enlarged, and reliability of connection between the conductive portion 221 and the terminal post 212 can be improved. In another aspect, it is beneficial for enlarging the surface area of the conductive portion 221 and reducing the internal resistance of the conductive portion 221, thereby increasing the current density of the conductive portion 221.

In some embodiments of the present application, as shown in FIG. 4(a), in the first direction X, a size of the conductive portion 221 is less than or equal to the size of the via hole 2121.

In the above technical solution, in the first direction X, the size of the conductive portion 221 can be less than the size of the via hole 2121, so that a gap can be formed between the conductive portion 221 and the via hole 2121. The gap is conducive to mounting the conductive portion 221 into the via hole 2121, thereby increasing a success rate of mounting of the conductive portion 221. In the first direction X, the size of the conductive portion 221 may also be equal to the size of the via hole 2121, so that there may be no gap between the conductive portion 221 and the via hole 2121. This allows close fit to be formed between the conductive portion 221 and the via hole 2121 and is beneficial for improving sealing performance between the conductive portion 221 and the via hole 2121.

In some embodiments of the present application, as shown in FIG. 4(a), in the first direction X, the size of the conductive portion 221 is L1, and the size of the via hole 2121 is L2, where 0 mm≤L2-L1≤4 mm.

L2-L1 may be, but is not limited to, 0 mm, 0.5 mm, 1 mm, 1.5 mm, 2 mm, 2.5 mm, 3 mm, 3.5 mm, 4.0 mm, and the like.

It can be understood that in the first direction X, L2-L1 can be 0 mm, and the conductive portion 221 and a hole wall of the via hole 2121 are in close fit, which can reduce a probability of formation of a gap between the conductive portion 221 and the via hole 2121, improve the sealing performance of the conductive portion 221 and the via hole 2121 in the first direction X, and reduce pollutants such as external dust and particulate matters that enter the shell 211, thereby improving the reliability of the battery cell 20.

In the first direction X, if L2-L1 is greater than 4 mm, the gap between the conductive portion 221 and the via hole 2121 is large. Although it is easier to mount the conductive portion 221 in the via hole 2121, the large gap is not beneficial for improving the sealing performance of the conductive portion 221 and the via hole 2121 in the first direction X. By setting L2-L1 to be less than or equal to 4 mm, the gap between the conductive portion 221 and the via hole 2121 is appropriate, which not only facilitates the conductive portion 221 to be mounted into the via hole 2121, but also reduces the difficulty of sealing between the conductive portion 221 and the via hole 2121, thereby improving the sealing performance between the conductive portion 221 and the via hole 2121. Since the gap between the conductive portion 221 and the via hole 2121 in the first direction X is appropriate, the conductive portion 221 can be easily removed from the via hole 2121, which is convenient for maintenance and repair. This can also reduce a force between the conductive portion 221 and the via hole 2121 during mounting or removal, reduce a probability of damage to the conductive portion 221, and improve the reliability of the battery cell 20.

Secondly, by setting L2-L1 to be less than or equal to 4 mm, an adjustment gap can also be provided. During the mounting of the conductive portion 221, displacement of the conductive portion 221 in the first direction X can be adjusted, which is beneficial for improving a success rate of mounting the conductive portion 221 into the via hole 2121.

In the above technical solution, by setting a difference between the size L1 of the conductive portion 221 and the size L2 of the via hole 2121 in the first direction X within the range of 0 mm to 4 mm, there can be no gap or there may be a small gap between the conductive portion 221 and the hole wall of the via hole 2121 in the first direction X. In one aspect, the sealing performance between the conductive portion 221 and the via hole 2121 can be improved in case of no gap. In another aspect, the difficulty of mounting between the conductive portion 221 and the via hole 2121 can be reduced in a case of a small gap, and the probability of damage to the conductive portion 221 during mounting or removal can be reduced. It is beneficial for reducing a probability of a sealing failure occurring between the conductive portion 221 and the via hole 2121.

In some embodiments of the present application, as shown in FIG. 4(b), in the first direction X, a size of the first connecting portion 23 is greater than the size of the via hole 2121.

The first connecting portion 23 may be, but is not limited to, a welded fusion portion, an adhesive, or another component. Exemplarily, the first connecting portion 23 is a welded fusion portion. A portion of the via hole 2121 may be formed into the first connecting portion 23 after being welded with the conductive portion 221. In this case, the size of the via hole 2121 in the first direction X may be a size of an undeformed portion that is far away from the first connecting portion 23.

In the above technical solution, the first connecting portion 23 can cover the via hole 2121 in the first direction X, so as to play a better sealing role and reduce a probability of poor sealing between the via hole 2121 and the conductive portion 221.

In some embodiments of the present application, as shown in FIG. 4(a), in the second direction Y, a size of the conductive portion 221 is less than or equal to the size of the via hole 2121.

In the above technical solution, in the second direction Y, the size of the conductive portion 221 can be less than the size of the via hole 2121, so that there may be a gap between the conductive portion 221 and the via hole 2121 to facilitate the conductive portion 221 to be mounted in the via hole 2121, thereby increasing the success rate of mounting of the conductive portion 221. In the second direction Y, the size of the conductive portion 221 may also be equal to the size of the via hole 2121, so that there may be no gap between the conductive portion 221 and the via hole 2121. This allows close fit to be formed between the conductive portion 221 and the via hole 2121 and is beneficial for improving the sealing performance between the conductive portion 221 and the via hole 2121.

In some embodiments of the present application, as shown in FIG. 4(a), in the second direction Y, the size of the conductive portion 221 is W1, and the size of the via hole 2121 is W2, where 0 mm≤W2-W1≤0.1 mm.

W2-W1 may be, but is not limited to, 0 mm, 0.01 mm, 0.02 mm, 0.03 mm, 0.04 mm, 0.05 mm, 0.06 mm, 0.07 mm, 0.08 mm, 0.09 mm, 0.1 mm, and the like. Among them, the size W2 of the via hole 2121 can be a width size. In the electrode assembly 22, a plurality of layers of positive electrode plates and a plurality of layers of negative electrode plates are included, and the conductive portion 221 can be formed by stacking portions extending out of the plurality of layers of positive electrode plates or the plurality of layers of negative electrode plates. Therefore, the size W2 of the via hole 2121 satisfies a formula: W2=S*δ (S represents a quantity of layers of positive electrode plates or the negative electrode plates, and δ represents a thickness of the portion extending out of a single positive electrode plate or a single negative electrode plate).

It can be understood that in the second direction Y, W2-W1 can be 0 mm. That is, the conductive portion 221 and the hole wall of the via hole 2121 are in close fit, which can reduce a probability of formation of a gap between the conductive portion 221 and the via hole 2121, improve the sealing performance of the conductive portion 221 and the via hole 2121 in the second direction Y, and reduce pollutants such as external dust and particulate matters that enter the shell 211, thereby improving the reliability of the battery cell 20.

Since the size of the via hole 2121 in the first direction X is greater than the size of the via hole 2121 in the second direction Y, that is, the first direction X is the length direction of the via hole 2121, and the second direction Y is the width direction of the via hole 2121. In the second direction Y, if W2-W1 is greater than 0.1 mm, according to a volume calculation formula for a rectangular space, it can be seen that the gap space between the conductive portion 221 and the via hole 2121 can be enlarged significantly, which is not beneficial for improving the sealing performance of the conductive portion 221 and the via hole 2121 in the second direction Y. By setting W2-W1 to be less than or equal to 0.1 mm, the gap between the conductive portion 221 and the via hole 2121 is appropriate, which can not only facilitate the conductive portion 221 to be mounted into the via hole 2121, but also reduce the difficulty of sealing between the conductive portion 221 and the via hole 2121. It is beneficial for improving the sealing performance between the conductive portion 221 and the via hole 2121.

Meanwhile, since the gap between the conductive portion 221 and the via hole 2121 in the second direction Y is appropriate, the conductive portion 221 can also be easily removed from the via hole 2121, which is convenient for maintenance and repair. In addition, this can also reduce the force between the conductive portion 221 and the via hole 2121 during mounting or removal, reduce the probability of damage to the conductive portion 221, and improve the reliability of the battery cell 20.

In the above technical solution, by setting a difference between the size W1 of the conductive portion 221 and the size W2 of the via hole 2121 in the second direction Y within the range of 0 mm to 0.1 mm, there can be no gap or there may be a small gap between the conductive portion 221 and the hole wall of the via hole 2121 sin the second direction. In one aspect, the sealing performance between the conductive portion 221 and the via hole 2121 can be improved in case of no gap. In another aspect, the difficulty of mounting between the conductive portion 221 and the via hole 2121 can be reduced in a case of a small gap, and a probability of damage to the conductive portion 221 during mounting or removal can be reduced. It is beneficial for reducing the probability of the sealing failure between the conductive portion 221 and the via hole 2121.

In some embodiments of the present application, as shown in FIG. 4(b), in the second direction Y, a size of the first connecting portion 23 is greater than the size of the via hole 2121.

The first connecting portion 23 may be, but is not limited to, a welded fusion portion, an adhesive, or another component. Exemplarily, the first connecting portion 23 is a welded fusion portion. A portion of the via hole 2121 may be formed into the first connecting portion 23 after being welded with the conductive portion 221. In this case, the size of the via hole 2121 in the second direction Y may be a size of an undeformed portion that is far away from the first connecting portion 23.

In the above technical solution, the first connecting portion 23 can cover the via hole 2121 in the second direction Y, so as to play a better sealing role and reduce a probability of poor sealing between the via hole 2121 and the conductive portion 221.

In some embodiments of the present application, as shown in FIG. 3, the conductive portion 221 has a far end portion 2211 far away from the inner side of the shell 211; and the far end portion 2211 is connected to the via hole 2121 through the first connecting portion 23.

The via hole 2121 may be a channel that penetrates through the terminal post 212 and has a large depth. A portion of the via hole 2121 that is located inside the shell 211 is an inner side, and a portion close to an exterior of the shell 211 is an outer side. The far end portion 2211 may be an end portion close to the outer side of the via hole 2121. The far end portion 2211 may be located inside the via hole 2121, or the far end portion 2211 may be flush with an outer side edge of the via hole 2121, or the far end portion 2211 may extend out of the via hole 2121.

The outer side of the via hole 2121 may be referred to as an entrance side. The conductive portion 221 is connected to the via hole 2121 through the first connecting portion 23 at the far end portion 2211, so that the entrance side of the via hole 2121 can be sealed, thereby reducing pollutants such as impurities and large particulate matters that enter the gap formed between the conductive portion 221 and the via hole 2121, reducing residues of pollutants in the via hole 2121, and reducing a probability of damage to the terminal post 212 and the conductive portion 221 due to chemical reactions caused by the presence of the pollutants in the via hole 2121.

Secondly, the first connecting portion 23 can be arranged on the outer sides of the conductive portion 221 and the via hole 2121, which reduces the difficulty of molding the first connecting portion 23, improves the molding rate of the first connecting portion 23, and is beneficial for reducing the costs. An example in which the conductive portion 221 and the via hole 2121 are welded is used. A welding gun can weld the far end portion 2211 on the outer side of the via hole 2121. It is easy to arrange the welding gun, and a probability of molding the welded fusion portion is also large.

In the above technical solution, the conductive portion 221 is connected to the via hole 2121 through the first connecting portion 23 at the far end portion 2211. In one aspect, the first connecting portion 23 is located on the outer side of the via hole 2121, which is convenient for molding and can reduce the difficulty of connection between the conductive portion 221 and the via hole 2121 and improve the product yield. In another aspect, the first connecting portion 23 is connected between the far end portion 2211 and the via hole 2121, which can effectively prevent pollutants such as impurities and large particulate matters from going deep into the via hole 2121, reduce pollutants entering the gap formed between the conductive portion 221 and the via hole 2121, reduce a probability of electrochemical corrosion occurring in the conductive portion 221 and the terminal post 212, and help improve the reliability of the battery cell 20.

In some embodiments of the present application, as shown in FIG. 3 to FIG. 5, the terminal post 212 has a first surface 2122; the first surface 2122 is provided with an avoidance slot 2123; the via hole 2121 penetrates through the avoidance slot 2123; and the first connecting portion 23 is located inside the avoidance slot 2123.

The first surface 2122 may be, but is not limited to, a top surface and a side surface of the terminal post 212. For example, the shell 211 may have a third direction Z. The third direction Z may be perpendicular to the first direction X and the second direction Y. Exemplarily, the third direction Z may be a height direction of the shell 211. That is, the first surface 2122 may be a top surface of the terminal post 212 that is located in the third direction Z, or may be a side surface of the terminal post 212 that is located in the first direction X or a side surface located in the second direction Y.

Exemplarily, the first connecting portion 23 may be a welded fusion portion. After the terminal post 212 and the conductive portion 221 are welded, an excess weld metal may be formed. In this case, the avoidance slot 2123 may play a role in accommodating the excess weld height.

In the above technical solution, the avoidance slot 2123 can play a role in accommodating the first connecting portion 23. This can reduce a volume of an assembly formed by the terminal post 212, the conductive portion 221, and the first connecting portion 23, which is beneficial for saving a space. In another aspect, by providing the avoidance slot 2123, the weight of the terminal post 212 can be reduced, and the energy density of the battery cell 20 can be increased.

In some embodiments of the present application, as shown in FIG. 3, the first connecting portion 23 has an outer contour surface 23a facing an outer side of the avoidance slot 2123, and the outer contour surface 23a does not protrude out of the first surface 2122.

The outer contour surface 23a may be, but is not limited to, cambered, rectangular, and conical. In the above technical solution, by setting the outer contour surface 23a of the first connecting portion 23 not to protrude out of the first surface 2122, a probability of the first surface 2122 being a plane can be increased. When the terminal post 212 is connected to an adapter 24 through the first surface 2122, the terminal post 212 and the adapter 24 can resist against each other face to face, which is beneficial for improving reliability of connection between the terminal post 212 and the adapter 24 and improving the reliability of the battery cell 20.

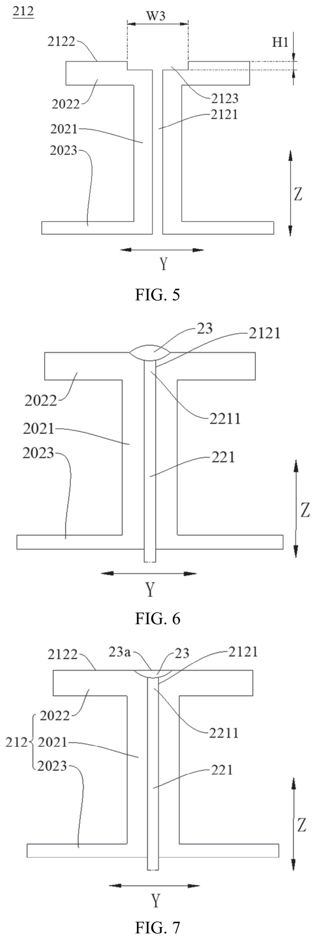

In some embodiments of the present application, as shown in FIG. 5, the shell 211 has a third direction Z; the third direction Z is perpendicular to the first wall 2111; and in the third direction Z, a size of the avoidance slot 2123 is H1, where 1 mm≤H1.

In the above technical solution, the third direction Z may be a slot depth direction of the avoidance slot 2123; the conductive portion 221 and the terminal post 212 may be connected by welding, and a height of a welded fusion portion is generally less than 1 mm. By setting the size H1 of the avoidance slot 2123 in the third direction Z to be greater than or equal to 1 mm, the avoidance slot 2123 can accommodate a first connecting portion 23 with a larger volume, and a probability of completely accommodating the first connecting portion 23 can be increased. Secondly, the size H1 of the avoidance slot 2123 is greater than or equal to 1 mm, which can further reduce the weight of the terminal post 212 and increase the energy density of the battery cell 20.

In some embodiments of the present application, as shown in FIG. 4(b) and FIG. 5, in the second direction Y, a size of the avoidance slot 2123 is W3, where W3≥ 2 mm.

In the above technical solution, if W3 is less than 2 mm, the size of the avoidance slot 2123 in the second direction Y is small. In order to allow the first connecting portion 23 to be accommodated in the avoidance slot 2123, the size of the first connecting portion 23 in the second direction Y is correspondingly small. This is not favorable for the first connecting portion 23 to seal the conductive portion 221 and the via hole 2121, and is not beneficial for improving the reliability of connection between the conductive portion 221 and the terminal post 212. By setting W3 to be greater than 2 mm, the size of the avoidance slot 2123 in the second direction Y is appropriate, and the size of the first connecting portion 23 in the avoidance slot 2123 can be large, which is favorable for the first connecting portion 23 to seal the conductive portion 221 and the via hole 2121 and is beneficial for improving the reliability of connection between the conductive portion 221 and the terminal post 212.

In some embodiments of the present application, as shown in FIG. 4(a), in the first direction X, a size of the avoidance slot 2123 is L3, and the size of the conductive portion 221 is L1, where L3-L1≥ 2 mm.

That is, L3-L1 may be, but is not limited to, 2 mm, 2.2 mm, 2.4 mm, 2.8 mm, 3 mm, 3.2 mm, 3.8 mm, 4 mm, and the like.

In the above technical solution, if the size L3 of the avoidance slot 2123 is less than the size L1 of the conductive portion 221 by 2 mm in the first direction X, a space reserved by the avoidance slot 2123 for the first connecting portion 23 is limited in the first direction X. Even if the first connecting portion 23 is connected to a slot wall of the avoidance slot 2123, the first connecting portion 23 also has a very small size in the first direction X, which is not beneficial for sealing of the conductive portion 221 and the via hole 2121 and connection between the conductive portion 221 and the terminal post 212. That is, by making the size L3 of the avoidance slot 2123 greater than or equal to the size L1 of the conductive portion 221 by 2 mm, a large space for forming the first connecting portion 23 can be formed between the avoidance slot 2123 and the conductive portion 221 in the first direction X, thereby facilitating the sealing of the conductive portion 221 and the via hole 2121 and improving the reliability of connection between the conductive portion 221 and the terminal post 212.

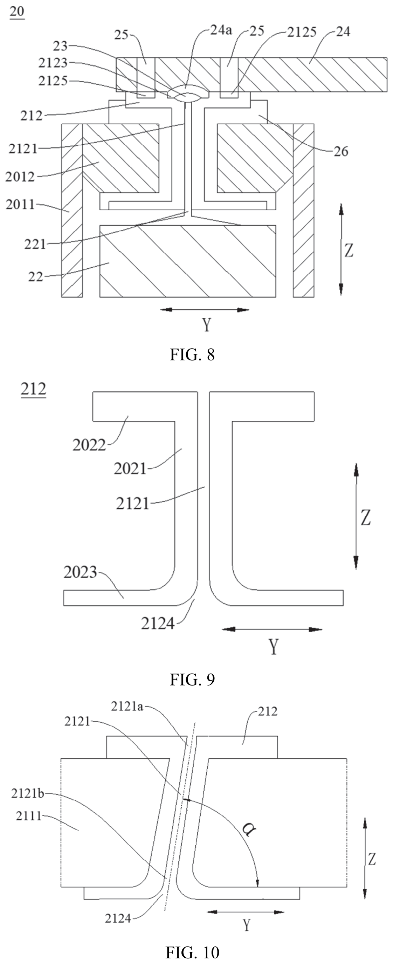

In some embodiments of the present application, as shown in FIG. 6 and FIG. 8, the terminal post 212 has a first surface 2122; the via hole 2121 penetrates through the first surface 2122; the first connecting portion 23 protrudes out of the first surface 2122; the terminal post 212 is configured to be connected to an adapter 24; an accommodating part 24a is arranged at an end portion of the adapter 24 that faces the first surface 2122; and the first connecting portion 23 is at least partially located inside the accommodating part 24a.

The first surface 2122 may be found in the above description. The first surface 2122 may be a surface for being connected to the adapter 24. The adapter 24 may be a conductive component for being connected to other battery cells 20 or a power connection apparatus. For example, the adapter 24 may be, but is not limited to, a busbar.

In the above technical solution, the first connecting portion 23 can protrude out of the first surface 2122. In this case, a periphery of the first connecting portion 23 can be unblocked, so that it is easy to mold the first connecting portion 23. This can increase a probability of molding the first connecting portion 23. The accommodating part 24a of the adapter 24 can play a role in accommodating the first connecting portion 23, so that a volume of an assembly formed by the terminal post 212, the conductive portion 221, and the adapter 24 is small; the weight can be reduced; and the energy density of the battery cell 20 can be increased.

Further, as shown in FIG. 8, the accommodating part 24a is arranged at an end portion of the adapter 24 that faces the first surface 2122; the first surface 2122 is provided with the avoidance slot 2123; a portion of the first connecting portion 23 is located inside the accommodating part 24a, and a remaining portion of the first connecting portion 23 is located inside the avoidance slot 2123.

In the above technical solution, the accommodating part 24a and the avoidance slot 2123 can simultaneously play a role in accommodating the first connecting portion 23. In a case of accommodating the first connecting portion 23, spaces of the accommodating part 24a and the avoidance slot 2123 can be made small, so that it is hard to damage the adapter 24 and the terminal post 212 due to their high structural strength.

In some embodiments of the present application, as shown in FIG. 7, the terminal post 212 has a first surface 2122; the via hole 2121 penetrates through the first surface 2122; the first connecting portion 23 has an outer contour surface 23a facing an outer side of the terminal post 212; and the outer contour surface 23a is flush with the first surface 2122.

According to the above, the first connecting portion 23 may be, but is not limited to, a welded fusion portion, an adhesive, or another component. After being molded, the first connecting portion 23 may protrude out of the first surface 2122. In this case, the first connecting portion 23 may be treated to cause the outer contour surface 23a to be flush with the first surface 2122. For example, when the first connecting portion 23 is a welded fusion portion, the welded fusion portion may form an excess weld height. In this shell, the excess weld height can be removed by grinding, to keep the first surface 2122 flat.

In the above technical solution, by setting the outer contour surface 23a of the first connecting portion 23 to be flush with the first surface 2122 of the terminal post 212, when the terminal post 212 is connected to the adapter 24 through the first surface 2122, the connection between the terminal post 212 and the adapter 24 can be tighter, which is beneficial for improving the reliability of connection between the terminal post 212 and the adapter 24.

In some embodiments of the present application, as shown in FIG. 10, the via hole 2121 is formed with a first orifice 2121a in the outer side of the terminal post 212, and is formed with a second orifice 2121b in an inner side of the terminal post 212; and a projection of the first orifice 2121a on the first wall 2111 and a projection of the second orifice 2121b on the first wall 2111 do not overlap.

The first orifice 2121a and the second orifice 2121b may be orifices in two ends of the via hole 2121. The projection of the first orifice 2121a on the first wall 2111 and the projection of the second orifice 2121b on the first wall 2111 do not overlap. It can be understood that the first orifice 2121a and the second orifice 2121b of the via hole 2121 are staggered. It is not likely that the molding process of the first connecting portion 23 affects the electrode assembly 22 on the inner side of the shell 211 through the second orifice 2121b.

Exemplarily, when the first connecting portion 23 is a welded fusion portion, during the welding molding of the first connecting portion 23, it is not likely that laser emitted by a laser welding gun reaches the electrode assembly 22 through the second orifice 2121b, thereby reducing a probability of the electrode assembly 22 being damaged by laser ablation. Exemplarily again, when the first connecting portion 23 is an adhesive, the adhesive may not drip onto the electrode assembly 22 inside the shell 211 through the second orifice 2121b during the molding of the first connecting portion 23, thereby reducing the impact of the adhesive on an internal environment of the shell 211.

In the above technical solution, by making the projections of the first orifice 2121a and the second orifice 2121b of the via hole 2121 on the first wall 2111 not overlap, the impact of the first connecting portion 23 on the internal environment of the shell 211 and the electrode assembly 22 during the molding can be effectively reduced, thereby improving the safety of the internal environment of the shell 211 and the electrode assembly 22.

In some embodiments of the present application, as shown in FIG. 10, the via hole 2121 has a hole central axis 2121c, and the hole central axis 2121c is inclined relative to the first wall 2111.

In the above technical solution, the hole central axis 2121c of the via hole 2121 is inclined relative to the first wall 2111, that is, the via hole 2121 is an inclined hole relative to the first wall 2111. This can reduce the impact of the first connecting portion 23 on the internal environment of the shell 211 and the electrode assembly 22 during the molding, and improve the manufacturability of the via hole 2121. It is beneficial for improving the product yield during manufacturing of the terminal post 212.

In some embodiments of the present application, as shown in FIG. 10, an angle between the hole central axis 2121c and the first wall 2111 is α, where 45 degrees ≤α≤ 90 degrees.

It can be understood that the angle α between the hole central axis 2121c and the first wall 2111 may be, but is not limited to, 45 degrees, 48 degrees, 50 degrees, 53 degrees, 55 degrees, 58 degrees, 60 degrees, 63 degrees, 65 degrees, 68 degrees, 70 degrees, 73 degrees, 75 degrees, 78 degrees, 80 degrees, 83 degrees, 85 degrees, 88 degrees, 90 degrees, and the like.

In the above technical solution, if the angle α between the hole central axis 2121c and the first wall 2111 is less than 45 degrees, a width of the terminal post 212 will be large, which increases material consumption and also increases the difficulty of manufacturing the terminal post 212. If the angle α between the hole central axis 2121c and the first wall 2111 is greater than 90 degrees, a staggering distance between the first orifice 2121a and the second orifice 2121b is short, which is not conducive to reducing the impact of the first connecting portion 23 on the internal environment of the shell 211 and the electrode assembly 22 during the molding.

In some embodiments of the present application, as shown in FIG. 10, a guide port 2124 is formed between the inner side of the terminal post 212 and the via hole 2121; and a width of the guide port 2124 gradually decreases in a direction from the inner side of the terminal post 212 to the outer side of the terminal post 212.

The inner side of the terminal post 212 may be a side close to an interior of the shell 211, namely, the guide port 2124 is formed between one end of the via hole 2121 that is close to the inner side of the shell 211 and the terminal post 212, and the guide port 2124 may be in a trumpet shape. Exemplarily, a chamfer may be formed between the terminal post 212 and the via hole 2121 to form the guide port 2124, or a fillet may be formed between the terminal post 212 and the via hole 2121 to form the guide port 2124.

In the above technical solution, since the width of the guide port 2124 gradually decreases in the direction from the inner side of the terminal post 212 to the outer side of the terminal post 212, and an initial width of the guide port 2124 is greater than a width of the via hole 2121, the conductive portion 221 can easily enter the guide port 2124 first in the process of mounting the conductive portion 221 into the via hole 2121, and can be easily inserted into the via hole 2121 under the guiding action of the guide port 2124. In this way, a resistance to the conductive portion 221 passing through the via hole 2121 can be reduced; damage to the conductive portion 221 can be reduced; and mounting efficiency of the conductive portion 221 can be improved.

In some embodiments of the present application, as shown in the figure, the terminal post 212 includes: a post body part 2021, a first plate part 2022, and a second plate part 2023; the post body part 2021 is arranged in the through hole 2112 in a penetrating manner; the first plate part 2022 and the second plate part 2023 are vertically connected to the post body part 2021; the first plate part 2022 is located on the outer side of the shell 211, and the second plate part 2023 is located on the inner side of the shell 211; and the via hole 2121 penetrates through the first plate part 2022, the post body part 2021, and the second plate part 2023.

The post body part 2021 may be a columnar component, and the post body part 2021 may be, but is not limited to, a cylinder or a rectangular column. The first plate part 2022 and the second plate part 2023 may be finger-plate-shaped components, and the first plate part 2022 and the second plate part 2023 may be, but are not limited to, in a flat plate shape.

In the above technical solution, by setting the terminal post 212 to include the post body part 2021, the first plate part 2022, and the second plate part 2023, the terminal post 212 can be of an I-shaped structure. The first plate part 2022 and the second plate part 2023 are located on the inner and outer sides of the shell 211, which can reduce a probability that the terminal post 212 is separated from the shell 211 and improve reliability of mounting of the terminal post 212 and the shell 211. The via hole 2121 can be formed in the first plate part 2022, the post body part 2021, and the second plate part 2023. An accommodating space formed in the via hole 2121 is large, which can accommodate a conductive portion 221 with a larger volume and improve the reliability of connection between the conductive portion 221 and the terminal post 212. Meanwhile, an effect of reducing the mass of the terminal post 212 is better, and it is beneficial for increasing the energy density of the battery cell 20.

In some embodiments of the present application, as shown in FIG. 8, the terminal post 212 is provided with a connecting region 2125; the connecting region 2125 is configured to be connected to the adapter 24; and a second connecting portion 25 is formed between the connecting region 2125 and the adapter 24.

According to the above, the conductive portion 221 may pass through 2121, and the conductive portion 221 and the via hole 2121 may be hermetically connected through the first connecting portion 23, so that there is no need of arranging an additional component such as a cover plate on the terminal post 212. The terminal post 212 may be directly connected to the adapter 24 by arranging the connecting region 2125. That is, the connecting region 2125 may be a connecting position for being connected to the adapter 24 on the terminal post 212. A plurality of connecting regions 2125 may be provided on the terminal post 212. The reliability of connection between the terminal post 212 and the adapter 24 can be improved by increasing the quantity of the connecting regions 2125. Exemplarily, two connecting regions 2125 are provided on the terminal post 212.

The second connecting portion 25 may be a welded fusion portion. The welded fusion portion may specifically be a structure formed by welding and fusing the terminal post 212 and the adapter 24.

In the above technical solution, the terminal post 212 is connected to the adapter 24 through the connecting region 2125, and the second connecting portion 25 is formed between the connecting region 2125 and the adapter 24. In this way, the terminal post 212 and the adapter 24 can be connected without providing an additional component between them. This can reduce a quantity of components, thus reducing the weight of the battery cell 20, and it is beneficial for improving the energy density of the battery cell 20.

In some embodiments of the present application, as shown in FIG. 3 and FIG. 8, the shell 211 includes a shell body 2011 and an end cover 2012; the end cover 2012 covers an opening of the shell body 2011; and the shell body 2011 or the end cover 2012 is formed with the first wall 2111.

The shell body 2011 may be, but is not limited to, cylindrical, square, or the like. The shell body 2011 may have a plurality of shell walls. The first wall 2111 may be a shell wall of the shell body 2011 located in any one of the first direction X, the second direction Y, and the third direction Z. The end cover 2012 may be a cover plate for closing the opening of the shell body 2011. The first wall 2111 may also be formed on the end cover 2012. The end cover 2012 may be arranged at one end of the shell body 2011 located in any direction of the first direction X, the second direction Y and the third direction Z.

In the above technical solution, the first wall 2111 can be arranged on the shell body 2011. That is, the via hole 2121 is formed in the shell body 2011, and the terminal post 212 is mounted on the shell body 2011. In this way, the structure on the end cover 2012 can be simplified, a quantity of components on the end cover 2012 can be reduced, and the weight of the end cover 2012 can be reduced, thereby improving reliability of connection between the end cover 2012 and the shell body 2011. The first wall 2111 can also be arranged on the end cover 2012. That is, the via hole 2121 is formed in the end cover 2012, and the terminal post 212 is mounted on the end cover 2012. Since the end cover 2012 can be separated from the shell body 2011 and processed separately, the via hole 2121 can be processed as the end cover 2012 is processed, which can reduce the difficulty of manufacturing of the via hole 2121 and improve the processing yield of the via hole 2121.

In a second aspect, an embodiment of the present application further provides a battery 100, including the foregoing battery cell 20.

The battery 100 may include a battery module. The battery module may include a plurality of battery cells 20. The battery 100 may also be a battery pack, and includes a plurality of battery modules.

In the above technical solution, the battery cell 20 is provided with the via hole 2121 in the terminal post 212; the conductive portion 221 of the electrode assembly 22 is arranged in the via hole 2121 in the penetrating manner; and the via hole 2121 and the conductive portion 221 are hermetically connected through the first connecting portion 23. In this way, it is beneficial for reducing a quantity of components of the battery cell 20 and reducing the weight of the battery cell 20. This can increase the energy density of the battery cell 20 and then increase the energy density of the battery 100.

In a third aspect, an embodiment of the present application further provides an electrical apparatus, including the foregoing battery cell 20, or the foregoing battery 100.

In the above technical solution, the use of the above battery cell 20 or battery 100 can effectively increase the energy density of the battery, thereby prolonging working time of the electrical apparatus and significantly enhancing the user experience.

It should be noted that the embodiments in the present application and features in the embodiments may be mutually combined without conflicts.

The above descriptions are merely preferred embodiments of the present application and are not intended to limit the present application. For those skilled in the art, the present application may have various modifications and changes. Any modification, equivalent replacement, improvement, etc. made within the spirit and principle of the present application shall fall within the scope of protection of the present application.

## Claims

1. A battery cell, comprising:
a case assembly, wherein the case assembly comprises a shell and a terminal post, the shell has a first wall, the first wall is provided with a through hole, the terminal post is arranged in the through hole in a penetrating manner, the terminal post is provided with a via hole, the via hole penetrates through the terminal post to communicate an inner side to an outer side of the shell; and
an electrode assembly, wherein the electrode assembly is arranged inside the shell, the electrode assembly has a conductive portion, the conductive portion is arranged in the via hole in a penetrating manner, a first connecting portion is formed between the conductive portion and the via hole, and the first connecting portion seals the via hole.

2. The battery cell according to claim 1, wherein the shell has a first direction and a second direction; the first direction and the second direction intersect each other and are parallel to the first wall; and
a size of the via hole in the first direction is greater than a size of the via hole in the second direction.

3. The battery cell according to claim 2, wherein in the first direction, a size of the conductive portion is less than or equal to the size of the via hole.

4. The battery cell according to claim 3, wherein in the first direction, the size of the conductive portion is L1, and the size of the via hole is L2, wherein 0 mm≤L2-L1≤4 mm.

5. The battery cell according to claim 3 or 4, wherein in the first direction, a size of the first connecting portion is greater than the size of the via hole.

6. The battery cell according to any one of claims 2 to 5, wherein in the second direction, a size of the conductive portion is less than or equal to the size of the via hole.

7. The battery cell according to claim 6, wherein in the second direction, the size of the conductive portion is W1, and the size of the via hole is W2, wherein 0 mm≤W2-W1≤0.1 mm.

8. The battery cell according to claim 6 or 7, wherein in the second direction, a size of the first connecting portion is greater than the size of the via hole.

9. The battery cell according to any one of claims 1 to 8, wherein the conductive portion has a far end portion far away from an inner side of the shell; and
the far end portion is connected to the via hole through the first connecting portion.

10. The battery cell according to any one of claims 1 to 9, wherein the terminal post has a first surface;
the first surface is provided with an avoidance slot;
the via hole penetrates through the avoidance slot; and
the first connecting portion is located inside the avoidance slot.

11. The battery cell according to claim 10, wherein the first connecting portion has an outer contour surface facing an outer side of the avoidance slot, and the outer contour surface does not protrude out of the first surface.

12. The battery cell according to claim 10 or 11, wherein the shell has a third direction;
the third direction is perpendicular to the first wall; and
in the third direction, a size of the avoidance slot is H1, wherein 1 mm≤H1.

13. The battery cell according to any one of claims 1 to 9, wherein the terminal post has a first surface;
the via hole penetrates through the first surface;
the first connecting portion protrudes out of the first surface;
the terminal post is configured to be connected to an adapter;
an accommodating part is arranged at an end portion of the adapter that faces the first surface; and
the first connecting portion is at least partially located inside the accommodating part.

14. The battery cell according to any one of claims 1 to 9, wherein the terminal post has a first surface;
the via hole penetrates through the first surface;
the first connecting portion has an outer contour surface facing an outer side of the terminal post; and
the outer contour surface is flush with the first surface.

15. The battery cell according to any one of claims 1 to 14, wherein the via hole is formed with a first orifice in the outer side of the terminal post, and is formed with a second orifice in an inner side of the terminal post; and
a projection of the first orifice on the first wall and a projection of the second orifice on the first wall do not overlap.

16. The battery cell according to claim 15, wherein the via hole has a hole central axis, and the hole central axis is inclined relative to the first wall.

17. The battery cell according to claim 16, wherein an angle between the hole central axis and the first wall is α, and 45 degrees ≤α≤ 90 degrees.

18. The battery cell according to any one of claims 1 to 17, wherein a guide port is formed between the inner side of the terminal post and the via hole; and
a width of the guide port gradually decreases in a direction from the inner side of the terminal post to the outer side of the terminal post.

19. The battery cell according to any one of claims 1 to 18, wherein the terminal post comprises:
a post body part, wherein the post body part is arranged in the through hole in a penetrating manner;
a first plate part and a second plate part, wherein the first plate part and the second plate part are vertically connected to the post body part, the first plate part is located on the outer side of the shell, the second plate part is located on an inner side of the shell, and the via hole penetrates through the first plate part, the post body part, and the second plate part.

20. The battery cell according to any one of claims 1 to 19, wherein the terminal post is provided with a connecting region;
the connecting region is configured to be connected to the adapter; and
a second connecting portion is formed between the connecting region and the adapter.

21. The battery cell according to any one of claims 1 to 20, wherein the shell comprises a shell body and an end cover;
the end cover covers an opening of the shell body; and
the shell body or the end cover is formed with the first wall.

22. A battery, comprising the battery cell according to any one of claims 1 to 21.

23. An electrical apparatus, comprising the battery cell according to any one of claims 1 to 21, or the battery according to claim 22.
